# EUROPÄISCHE PATENTANMELDUNG

(11) **EP 1 962 300 A2**
(43) Veröffentlichungstag der Anmeldung: **27.08.2008**
(21) Anmeldenummer: 08002702.2
(22) Anmeldetag: 14.02.2008
(51) Int. Cl.: H01F 7/18, H01F 7/06, H01F 7/16

(54) **Stellantrieb für Regelventile und/oder Absperrarmaturen**

(30) Priorität: 26.02.2007 DE 202007002760 U
(71) Anmelder: Barabas-Lammert, Kurt, Dr., 42659 Solingen (DE)
(72) Erfinder: Barabas-Lammert, Kurt, Dr., 42659 Solingen (DE)
(74) Vertreter: Neymeyer, Franz

(57) **Zusammenfassung**

Erfindungsgegenstand ist ein Stellantrieb für Regelventile und/oder Absperrarmaturen mit einem auf ein Schließ- bzw. Öffnungsorgan einwirkenden Stellorgan, bei dem das Stellorgan aus einem Schub- oder Zugstab (20, 21) besteht, der mit dem axial beweglichen Teil einer aus einer Magnetspule (3, 4) und einem zylindrischen Tauchanker (1) als Tauchspule ausgebildeten, elektromagnetischen Antriebseinheit in Antriebsverbindung steht und durch eine Rückstellfeder (15) in seine Ruhestellung bewegt und in dieser gehalten wird. Um einen solchen Stellantrieb anstelle der bekannten elektromotorischen, pneumatischen oder hydraulischen Antriebe verwenden zu können, ist vorgesehen, dass die jeweiligen Istpositionen des Stellorgans (20, 21) von einem elektrischen oder elektronischen Stellungsregler (36) erfasst und an einen elektronischen Stellverstärker (35) übermittelt werden, welcher beim Anliegen eines Befehlssignals (BS) die Tauchspule (3, 4) mit der für die Betätigung des Stellorgans (20, 21) erforderlichen, zwischen einem Minimalwert und einem Maximalwert variierbaren Arbeitsspannung beaufschlagt, bis der Stellungsregler (36) die mit dem Befehlssignal (BS) vorgegebene Stellung des Stellorgans (20, 21) rückführend signalisiert.

## Beschreibung

Die Erfindung betrifft einen Stellantrieb für Regelventile und/oder Absperrarmaturen mit einem auf ein Schließ- bzw. Öffnungsorgan einwirkenden Stellorgan, bei dem das Stellorgan aus einem Schub- oder Zugstab besteht, der mit dem axial beweglichen Teil einer aus einer Magnetspule und einem zylindrischen Tauchanker bestehenden, als Tauchspule ausgebildeten, elektromagnetischen Antriebseinheit in Antriebsverbindung steht und durch eine Rückstellfeder in seine Ruhestellung bewegt und in dieser gehalten wird.

Stellantriebe für Regelventile und Absperrarmaturen werden bisher nahezu ausschließlich pneumatisch oder elektromotorisch betrieben, d.h. sie sind mit pneumatischen Antriebseinheiten oder mit Elektromotoren versehen. Dabei gibt es elektromagnetische Stellantriebe, die ein in mehrere Drehstellungen bringbares Stellorgan aufweisen, das durch mehrere unterschiedlich positionierte Spulen verstellt werden kann (DE 2004 037 360 A1, DE 10 2005 026 535 A1). Während bei pneumatischen Antriebseinheiten die Steuermittel von relativ einfacher Beschaffenheit sind, jedoch das Vorhandensein einer Druckluftquelle erfordern, benötigen elektromotorische Antriebe meist kostenintensive Steuereinrichtung und Leistungsteile sowie ggf. zusätzliche Getriebeeinrichtungen. Außerdem sind die bei kleinen Baugrößen erzielbaren Arbeitsdrehmomente schwach.

Es ist allgemein bekannt, dass solche Tauchankereinheiten bzw. Tauchspulen der eingangs genannten Art in der Lage sind, auch bei sehr kleiner Bauart hohe Stellkräfte zu erzeugen, so dass sie auch geeignet sind, druckbelastete Schließorgane von Ventilen oder Schließarmaturen sicher zwischen zwei definierten Endstellungen zu betätigen und dabei zugleich die beiden Endpositionen der jeweils bewegungsaktiven Teile als Sicherheitsstellungen zu gewährleisten, ohne dass dazu zusätzliche Hilfskräfte mit besonderer Energieversorgung erforderlich wären, wenn die erforderliche elektrische Energie, genauer gesagt, die ausreichende Ampere-Windungszahl in entsprechender Überdimensionierung vorhanden ist. Abgesehen davon, dass bei den bekannten Tauchankermagneten keine definierten, zwischen den beiden Endstellungen liegenden Zwischenstellungen der von ihnen betätigten Schließorgane eingestellt werden können, erfolgt deren Ansteuerung in jedem Falle mit dem gleichen Betätigungssignal und mit der gleichen Betriebsspannung bzw. mit derselben Arbeitsleistung, d.h. mit demselben Energieaufwand.

Der Erfindung liegt deshalb die Aufgabe zugrunde, einen einfachen und funktionssicheren Stellantrieb der eingangs genannten Art mit jeweils angepasster hoher Stellkraft und genereller Sicherheitsstellung ohne zusätzliche Hilfsenergie zu schaffen.

Gelöst wird diese Aufgabe erfindungsgemäß dadurch, dass die jeweiligen Istpositionen des Stellorgans von einem elektrischen oder elektronischen Stellungsregler erfasst und an einen elektronischen Stellverstärker übermittelt werden, welcher beim Anliegen eines Befehlssignals die Tauchspule mit der für die Betätigung des Stellorgans erforderlichen, zwischen einem Minimalwert und einem Maximalwert variierbaren Arbeitsspannung beaufschlagt, bis der Stellungsregler die mit dem Befehlssignal vorgegebene Stellung des Stellorgans rückführend signalisiert.

Dabei kann die Arbeitsspannung maximal den Wert (100%) der am Stellverstärker angelegten Versorgungsspannung annehmen.

Mit den erfindungsgemäß vorgesehenen Steuer- und Regeleinrichtungen lässt sich die Arbeitsspannung, d.h. die Antriebsenergie an die jeweils benötigte Stellkraft anpassen und es lassen sich auch beliebige Zwischenstellungen der bewegungsaktiven Teile anfahren. Wichtig ist dabei auch der weitere Vorteil, dass aus jeder Zwischenstellung mit einem entsprechenden Befehlssignal eine beliebige andere Zwischenstellung der bewegungsaktiven Teile- sprich: der Tauchspule- angesteuert werden kann. Es ist somit nicht nur möglich eine "Auf-Zu"- Funktion auszuführen, sondern echte Regelfunktionen entsprechend vorgebbarer Parameter, beispielsweise entsprechend eines variablen Befehlssignals. Dabei ist es von besonderem Vorteil, dass durch den Stellungsregler im Bedarfsfall das Befehlssignal von dem Positionssignal in der Weise überlagert wird, dass er einen höheren Kraftbedarf signalisiert und dadurch eine entsprechende Erhöhung der an der Tauchspule angelegten Arbeitsspannung bewirkt, die bis zu 100% der Versorgungsspannung betragen kann. Dieser Vorteil ist insbesondere dann von Bedeutung, wenn irgendwelche Störungskräfte die Betätigung des Stellorgans erschweren.

Ob bei gemäß Anspruch 2 ausgebildeten Stellantrieben die Magnetspule mit dem Tauchanker oder der Permanentmagnet als aktiv bewegliches Teil ausgebildet ist, richtet sich nach konstruktiven Gesichtspunkten.

Vorteilhafte Ausgestaltungen der Erfindung sind Gegenstand der weiteren Unteransprüche.

Anhand der Zeichnung wird die Erfindung im Folgenden näher erläutert. Es zeigt:
- Fig. 1: in schematisch vereinfachter Schnittdarstellung einen elektromagnetischen Stellantrieb, bei dem ein Schubstab mit einem die Magnetspule tragenden Tauchanker als dem aktiv beweglichen Teil verbunden ist;
- Fig. 1a: in schematisch vereinfachter Schnittdarstellung einen elektromagnetischen Stellantrieb, bei dem ein Zugstab mit einem Permanentmagneten als dem aktiv beweglichen Teil verbunden ist;
- Fig. 2: eine vereinfachte Schnittdarstellung der Verbindung des Schubstabes mit einem Tauchspulenkörper aus Fig. 1;
- Fig. 3: in schematisch vereinfachter Schnittdarstellung einen elektromagnetischen Stellantrieb, bei dem ein Zugstab mit einem die Magnetspule tragenden Tauchanker als dem aktiv beweglichen Teil verbunden ist;
- Fig. 3a: in schematisch vereinfachter Schnittdarstellung einen elektromagnetischen Stellantrieb, bei dem ein Schubstab mit einem Permanentmagneten als dem aktiv beweglichen Teil verbunden ist;
- Fig. 4: eine vereinfachte Schnittdarstellung der Verbindung des Zugstabes mit einem Tauchspulenkörper aus Fig. 3;
- Fig. 5: in teilweise geschnittener Seitenansicht eine Auf/Zu- Armatur;
- Fig. 6: in vereinfachter Schnittdarstellung ein Flanschrohr mit einer Drosselklappe;
- Fig. 7: einen Schnitt VII - VII aus Fig. 6 und
- Fig. 8: einen Schnitt VIII - VIII aus Fig. 7 und
- Fig. 9: ein Blockschaltbild des Stellverstärkers und des Stellungsreglers.

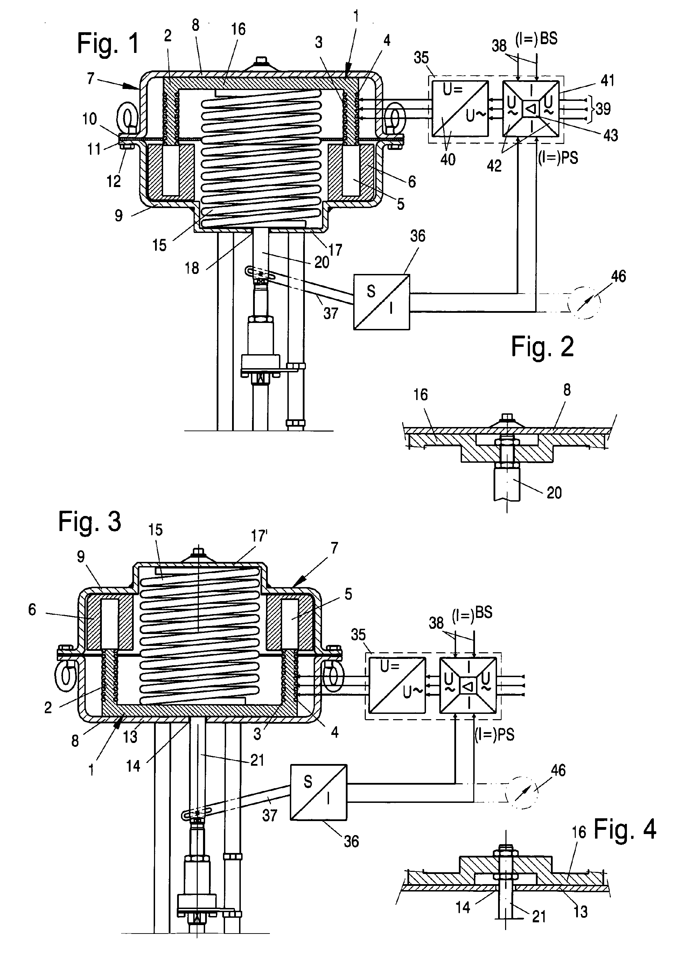

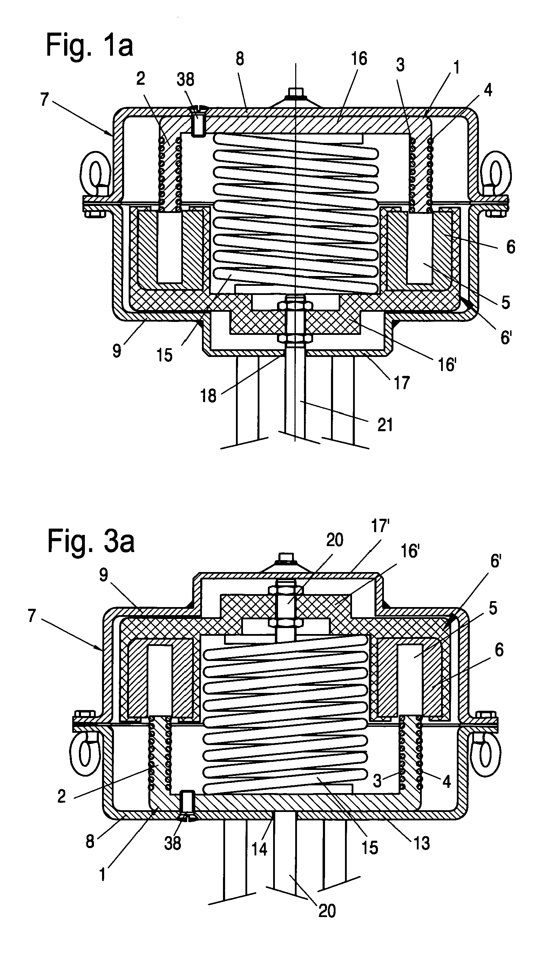

Der in Fig. 1 schematisch vereinfacht dargestellte Stellantrieb für Regelventile und/oder Absperrarmaturen besteht im Wesentlichen aus einem topfförmigen Tauchanker 1, an dessen Zylinderwand 2 innenseitig und/oder außenseitig wenigstens eine Magnetspule 3 bzw. 4 festsitzend angeordnet ist. Dabei ist der Tauchanker 1 axial beweglich so gelagert, dass seine Zylinderwand 2 mit der oder den Magnetspulen 3 bzw. 4 in einer Ringnut 5 eines stationär angeordneten, axial gepolten, ringförmigen Permanentmagneten 6 eintauchen kann.

Der Permanentmagnet 6 mit seiner Ringnut 5 und der Tauchanker 1 sind in einem zweiteiligen Gehäuse 7 untergebracht, das aus einem topfförmigen Oberteil 8 und einem ebenfalls topfförmigen Unterteil 9 besteht. Das Oberteil 8 und das Unterteil 9 sind jeweils mit Flanschringen 10 bzw. 11 versehen, die durch Schrauben 12 lösbar miteinander verbunden sind.

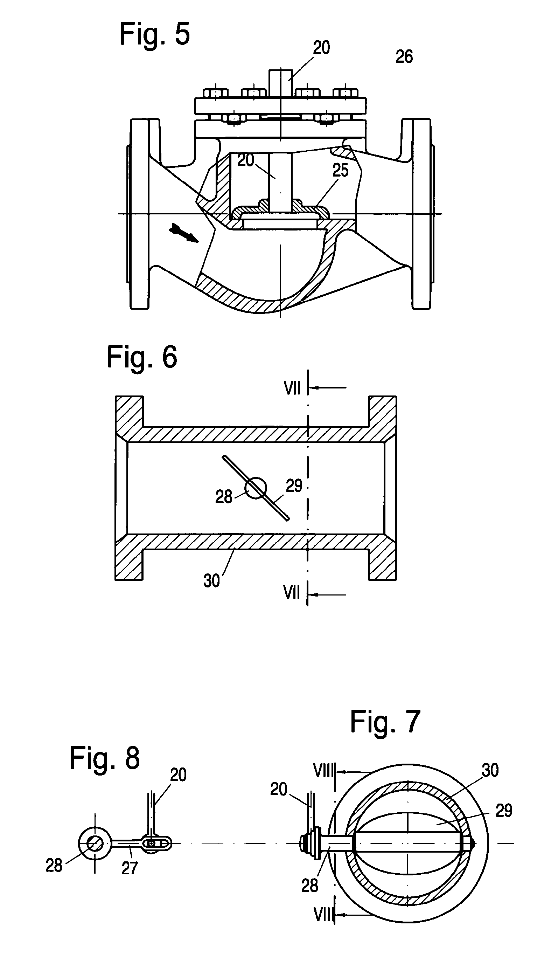

Der Tauchanker 1 ist mit einer als Druckfeder ausgebildeten Rückstellfeder 15 versehen, die sich einerseits an der Unterseite der Stirnwand 16 des Tauchankers 1 und andererseits an einem Stirnwandteil 17 des Gehäuseunterteils 9 abstützt. In konzentrischer Anordnung zur Zylinderwand 2 des Tauchankers 1 ist an der Stirnwand 16, wie aus Fig. 2 ersichtlich ist, ein Schubstab 20 befestigt, der eine Bohrung 18 des unteren Stirnwandteiles 17 durchragt und der beispielsweise mit dem Schließorgan 25 einer Auf/Zu-Armatur 26 gemäß Fig. 5 verbunden ist. In analoger Weise ist es auch möglich, diesen Schubstab 20 gemäß Fig. 6 bis 8 mit dem Betätigungshebel 27 der Lagerwelle 28 einer Drosselklappe 29 zu verbinden, die in einem Flanschrohr 30 schwenkbar gelagert ist.

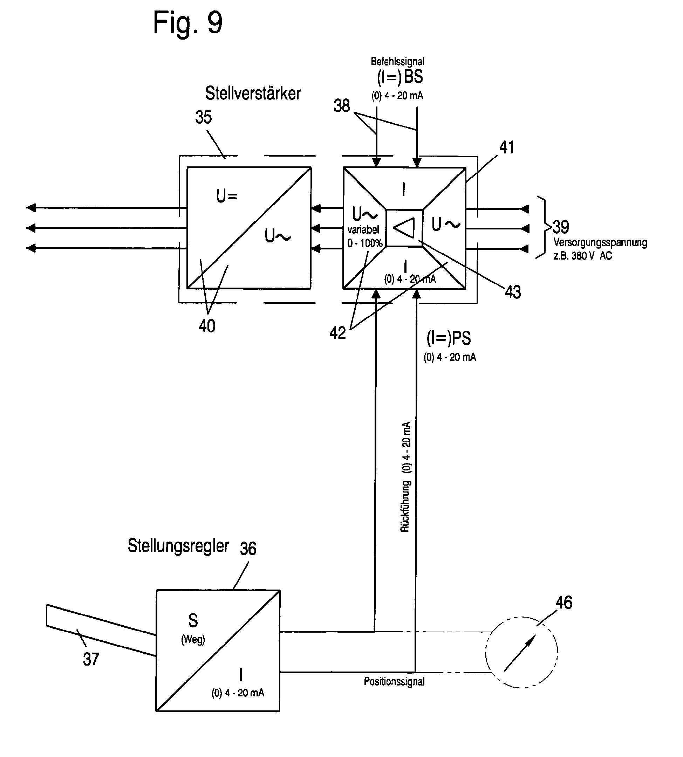

Für die Ansteuerung bzw. Erregung der Magnetspulen 3 und 4 ist ein von einer externen Spannungsquelle 39, z.B. einer Netzspannung 230 V oder 380 V Wechselspannung versorgter, elektronischer Stellverstärker 35 vorgesehen, der durch Befehlssignale BS steuerbar bzw. regelbar ist. (siehe auch Fig. 9) In den Stellverstärker 35 sind eine Gleichrichtereinheit 40 und eine Regeleinheit 41 integriert, welche die für die Erregung der Magnetspulen 3, 4 benötigte Gleichspannung bereitstellen, damit diese die jeweils geforderte Stellkraft erzeugen. Bei dem in Fig. 1 dargestellten Ausführungsbeispiel ist an diesen Stellverstärker 35 ein Stellungsregler 36 elektrisch angeschlossen, der über einen Hebelarm 37 mit dem Schubstab 20 verbunden ist und dessen jeweilige Arbeitsposition an den Stellungsregler 36 meldet, um jeweils entsprechende Positionssignale PS an den Stellverstärker 35 bzw. an die Regeleinheit 41 weiterzugeben und eine entsprechende Erregung der Magnetspulen 3 bzw. 4 zu bewirken. Dabei kann die Arbeitsspannung U= bis zum maximalen, der Versorgungsspannung U (AC) entsprechenden Wert erhöht werden, um immer die zum Anfahren der jeweiligen Sollpositionen des Stellorgans, d.h. des Schubstabes 20, erforderliche Stellkraft zu erreichen.

Zu diesem Zweck ist in die Regeleinheit 41 eine elektronische Einheit 43 integriert, die einen ebenfalls integrierten Spannungsregler 42 in Abhängigkeit von dem jeweils anstehenden Befehlssignal BS und/oder dem anstehenden Positionssignal PS steuert. Diese elektronische Einheit 43 kann beispielsweise ein Mikroprozessor sein.

Dieser Stellantrieb kann bei entsprechender Auslegung der Magnetspulen 3, 4 mit unterschiedlichen Betriebsspannungen U bzw. gleichgerichteten Arbeitsspannungen U= betrieben werden.

Über den Signaleingang 38 kann dem Stellverstärker 35 bzw. der Regeleinheit 41 das Befehlssignal BS in Form eines Sollwertsignals zugeführt werden, um beispielsweise eine bestimmte Zwischenstellung des jeweils bewegungsaktiven Teils, d.h. des Stellorgans 20, 21, anzufahren. Dieses Sollwertsignal ist jeweils durch eine bestimmte Stromstärke I bzw. einen Stromstärkebereich von beispielsweise 0 - 20 mA oder 4 - 20 mA Gleichstrom (DC) definiert.
Der Stellungsregler 36 umfasst einen Weggeber s, der in Abhängigkeit von der jeweils erreichten Istposition des Stellorgans 20 ein Positionssignal PS bestimmter Stromstärke I bzw. eines Stromstärkebereichs von beispielsweise 0 - 20 mA oder 4 - 20 mA Gleichstrom (DC) an die Regeleinheit sendet. Durch dieses Positionssignal PS kann die Regeleinheit 41 des Stellverstärkers 35 derart beeinflusst werden, dass die variable Betriebsspannung U dann erhöht wird, wenn das Stellorgan 20 die dem anliegenden Befehlssignal BS entsprechende Sollposition nicht erreicht. In diesem Fall übernimmt das Positionssignal BS die Steuerung der ausgangsseitig an der Regeleinheit 41 anliegenden Betriebsspannung U bzw. der daraus resultierenden Arbeitsspannung U=, die ausgangsseitig an der Gleichrichtereinheit 40 und an der bzw. den Magnetspulen 3, 4 anliegt.

Wie aus Fig. 1 und 2 ersichtlich ist, kann der Stellungsregler 36 auch mit einer Stellungsanzeige 46 versehen sein, welche die jeweilige Stellposition des Stellorgans, des Zug- oder Schubstabes 20, 21, anzeigt.

Während die Ausführungsform des in Fig. 1 und 2 dargestellten Stellantriebes für eine stoßende Arbeitsweise ausgelegt ist, handelt es sich beim Ausführungsbeispiel der Fig. 3 und 4 um einen auf Zugbetrieb ausgelegten Stellantrieb. Dieser besteht aus exakt den gleichen Bestandteilen, nämlich einem Tauchanker 1 mit der Zylinderwand 2, an der die Magnetspulen 3 und 4 angeordnet sind sowie aus dem axial polarisierten ringförmigen Permanentmagneten 6 mit der Ringnut 5. Der einzige Unterschied zu der Ausführungsform gemäß Fig. 1 und 2 besteht darin, dass die Anordnung auf den Kopf gestellt ist und ein Zugstab 21 vorgesehen ist, der eine zentrale Bohrung 14 der Stirnwand 13 des Gehäuseteils 8 durchragt und der in gleicher Weise wie der Schubstab 20 mit der Stirnwand 16 des Tauchankers 1 verbunden ist. Auch dieser Zugstab 21 kann mit einem Stellungsregler 36 versehen sein, der in analoger Weise mit dem Zugstab 21 in Verbindung steht und der elektrisch bzw. elektronisch mit dem Stellverstärker 35 verbunden ist.

Beim Ausführungsbeispiel der Fig. 1 und 2 übt der Tauchanker 1 bei Erregung der Magnetspulen 3, 4 auf den Schubstab 20 eine Schubkraft aus. Bei der Ausführungsform der Fig. 3 und 4 hingegen wird der Zugstab 21 bei entsprechender Erregung der Magnetspulen 3 und 4 in das Gehäuse 7 gezogen. Auch bei dieser Ausführungsform sorgt die Rückstellfeder 15 für die Rückstellung des Tauchankers 1 in seine in Fig. 3 dargestellte Ausgangsposition, wenn die Spulenerregung beendet ist.

Bei den bisher anhand der Fig. 1 und 3 beschriebenen Ausführungsformen des Stellantriebs ist jeweils der Tauchanker 1 als bewegliches Teil ausgebildet, das mit dem Schubstab 20 bzw. mit dem Zugstab 21 verbunden ist, um dessen Bewegung in Arbeitsrichtung zu bewirken.

Wie in den Fig. 1a und 3a dargestellt, ist es aber auch ohne Weiteres möglich, für beide Arbeitsmethoden, d.h. sowohl für den Schubbetrieb als auch für den Zugbetrieb, als bewegungsaktives Teil den Permanentmagneten 6 vorzusehen.

Dabei ist es allerdings von Vorteil, den Permanentmagneten 6 mit einem topfartigen Mantel 6' aus Kunststoff oder nichtmagnetischem Druckguss zu versehen, an dessen Stirnwand 16' der Zugstab 21 bzw. der Schubstab 20 befestigt ist. Um die Axialbewegungen des unter dem Einfluss der Rückstellfeder 15 stehenden Permanentmagneten 6 spielfrei auf den Zugstab 21 bzw. Schubstab 20 übertragen zu können, ist es erforderlich, zwischen dem Mantel 6' und dem Permanentmagneten 6 eine dauerhaft spielfreie Verbindung herzustellen, was am Besten durch einen Formschluss erreicht werden kann, bei dem der Mantel 6' die sich gegenüberliegenden Stirnflächen des ringförmigen Permanentmagneten 6 zumindest teilweise umschließt.

Es ist erkennbar, dass bei der Ausführung gemäß Fig. 1a, bei der die Anordnung des Tauchankers 1 und des Permanentmagneten 6 derjenigen der Fig. 1 entspricht, der Zugstab 21 mit dem beweglichen Teil, also mit dem Permanentmagneten 6, verbunden ist. Bei der Ausführungsform der Fig. 3a hingegen, die bezüglich der Anordnung des Tauchankers 1 und des Permanentmagneten 6 derjenigen der Fig. 3 entspricht, ist mit dem beweglichen Teil, d.h. mit dem Permanentmagneten 6, der Schubstab 20 verbunden. Es liegt somit in beiden Fällen bei analoger Anordnung der Bauteile in Ruhelage eine kinematische Umkehrung der Bewegungsverhältnisse vor. Bei den Ausführungen der Fig. 1 und 3 sind jeweils die Tauchanker 1 die bewegungsaktiven Teile, während bei den Ausführungen der Fig. 1a und 3a jeweils die Permanentmagneten 6 bewegungsaktiv sind. Dabei ergibt sich automatisch eine Vertauschung der Schub- und Zugbewegungen.

Es sei hier ausdrücklich erwähnt, dass mit allen Ausführungen dieses Stellantriebs auch Zwischenstellungen des jeweils beweglichen Teils, d.h. des Tauchankers 1 bzw. des Permanentmagneten 6, angesteuert werden können, wenn eine entsprechende Beaufschlagung der Magnetspulen 3, 4 durch die elektronische Regeleinheit erfolgt. Dabei ist aus jeder Zwischenstellung auch eine andere Zwischenstellung ansteuerbar.

## Patentansprüche

1. Stellantrieb für Regelventile und/oder Absperrarmaturen mit einem auf ein Schließ- bzw. Öffnungsorgan einwirkenden Stellorgan, bei dem das Stellorgan aus einem Schub- oder Zugstab (20, 21) besteht, der mit dem axial beweglichen Teil einer aus einer Magnetspule (3, 4) und einem zylindrischen Tauchanker (1) als Tauchspule ausgebildeten, elektromagnetischen Antriebseinheit in Antriebsverbindung steht und durch eine Rückstellfeder (15) in seine Ruhestellung bewegt und in dieser gehalten wird,
**dadurch gekennzeichnet,**
**dass** die jeweiligen Istpositionen des Stellorgans (20, 21) von einem elektrischen oder elektronischen Stellungsregler (36) erfasst und an einen elektronischen Stellverstärker (35) übermittelt werden, welcher beim Anliegen eines Befehlssignals (BS) die Tauchspule (3, 4) mit der für die Betätigung des Stellorgans (20, 21) erforderlichen, zwischen einem Minimalwert und einem Maximalwert variierbaren Arbeitsspannung beaufschlagt, bis der Stellungsregler (36) die mit dem Befehlssignal (BS) vorgegebene Stellung des Stellorgans (20, 21) rückführend signalisiert.

2. Stellantrieb nach Anspruch 1, **dadurch gekennzeichnet, dass** der Stellverstärker (35) außer einer Gleichrichtereinheit (40) eine Regeleinheit (41) aufweist, die eine, einen Spannungsregler (42) steuernde elektronische Einheit (Mikroprozessor) (43) umfasst, welcher das Befehlssignal (BS) und das Positionssignal (PS) des Stellungsreglers (36) separat zugeführt werden.

3. Stellantrieb nach Anspruch 1 oder 2, **dadurch gekennzeichnet, dass** der Stellungsregler (36) mit einem Weggeber (S) versehen ist, der in Abhängigkeit von der jeweiligen Istposition des Stellorgans (20, 21) einen Stromregler steuert, welcher elektrisch mit der Regeleinheit (41) verbunden ist und seinerseits die Positionssignale (PS) erzeugt.

4. Stellantrieb nach einem der Ansprüche 1 bis 3, **dadurch gekennzeichnet, dass** die Magnetspule (3, 4) an der inneren und/oder äußeren Umfangsfangsfläche einer aus magnetisierbarem Material bestehenden Zylinderwand (2) des Tauchankers (1) angeordnet ist, welcher bei elektrischer Erregung der Magnetspule (3, 4) in eine dazu koaxiale Ringnut (5) eines axial polarisierten Permanentmagneten (6) eintaucht.

5. Stellantrieb nach Anspruch 4, **dadurch gekennzeichnet, dass** der Permanentmagnet (6) die Form eines zylindrischen Ringes aufweist, in dem sich die einseitig offene Ringnut (5) befindet.

6. Stellantrieb nach Anspruch 4, **dadurch gekennzeichnet, dass** der Tauchanker (1) als bewegungsaktives Teil mittels eines stirnseitig angeordneten radialen Verbindungselements (16) in koaxialer Lage mit dem Schub- oder Zugstab (20, 21) verbunden ist.

7. Stellantrieb nach Anspruch 6, **dadurch gekennzeichnet, dass** das radiale Verbindungselement des Tauchzylinders als geschlossene Stirnwand (16) ausgebildet ist.

8. Stellantrieb nach einem der Ansprüche 4 bis 7, **dadurch gekennzeichnet, dass** der Permanentmagnet (6) als bewegungsaktives Teil über ein Verbindungselement (16') mit dem Schub- oder Zugstab (21, 20) verbunden ist.

9. Stellantrieb nach Anspruch 8, **dadurch gekennzeichnet, dass** das Verbindungselement aus einem nichtmagnetischen, topfartigen Mantel (6') aus Kunststoff oder Druckguss besteht.

10. Stellantrieb nach einem der Ansprüche 4 bis 9, **dadurch gekennzeichnet, dass** der Tauchanker (1) mit seiner Rückstellfeder (15) und der Permanentmagnet (6) in einem zweiteiligen Gehäuse (7) untergebracht sind.

11. Stellantrieb nach Anspruch 1, **dadurch gekennzeichnet, dass** der Stellungsregler (36) mit einer Stellungsanzeige (45) verbunden ist.

12. Stellantrieb nach einem der Ansprüche 1 bis 3 oder 9, **dadurch gekennzeichnet, dass** der Stellungsregler (36) einen Weggeber (S) aufweist, der einen als Stromregler ausgebildeten Positionssignalgeber (I) steuert.

13. Stellantrieb nach Anspruch 4, **dadurch gekennzeichnet, dass** der Tauchanker (1) mit wenigstens zwei Tauchspulen (3, 4) versehen ist, die wahlweise separat oder gemeinsam ansteuerbar sind.
